# FASCICULE DE BREVET EUROPEEN

(11) **EP 2 706 540 B1**
(45) Date de publication et mention de la délivrance du brevet: **09.09.2015**
(21) Numéro de dépôt: 13176139.7
(22) Date de dépôt: 11.07.2013
(51) Int. Cl.: H01B 7/36, H02G 1/00

(54) **Câble comportant un dispositif de marquage**
Kabel mit einer Markierungsvorrichtung
Cable comprising a marking device

(30) Priorité: 06.09.2012 FR 1258322
(43) Date de publication de la demande: 12.03.2014
(73) Titulaire: Nexans, 75008 Paris (FR)
(72) Inventeur: Benichou, Fabrice, 69100 Villeurbanne (FR); Cadour, Damien, 26200 Montélimar (FR)
(74) Mandataire: Lenne, Laurence

(56) Documents cités:
- WO-A1-2010/112207
- GB-A- 402 277
- JP-A- 2005 276 732
- JP-U- S5 435 391

## Description

L'invention concerne un câble comportant un dispositif de marquage en particulier un câble de transport électrique ou de données destiné à être enroulé sur un touret ou bobine.

L'objet de ce marquage est de permettre de couper une longueur de câble lors de son déroulement d'un touret sans nécessité de mesure.

Un tel dispositif de marquage est décrit dans le document de brevet JP 2005-276732.

Selon ce document, sur toute la longueur du câble sont marquées sur sa gaine extérieure des paires de valeurs identiques d'unités de longueur. Par exemple, ces données de marquage concernent le nombre de mètres de câble.

Au lieu d'être marquées une seule fois, ces valeurs sont marquées par paire identique et la coupe de la longueur désirée est effectuée entre deux valeurs adjacentes d'une paire. De cette façon, l'extrémité libre du câble enroulé sur le touret reste marquée d'une première valeur de longueur qui permet de repérer la longueur de la coupe suivante par visualisation et comparaison de cette première valeur avec les valeurs suivantes marquées sur le câble enroulé.

Un tel marquage à paires de valeurs croissantes est réalisé sur un câble qui est ensuite enroulé sur un touret.

Un repérage facile suppose que le câble soit toujours enroulé en partant de son extrémité portant la valeur de longueur supérieure et que son extrémité libre porte la valeur inférieure. Il suffit dans ce cas d'ajouter à cette valeur inférieure la longueur souhaitée et de couper le câble entre les deux valeurs de la paire correspondante.

Or, en pratique, toujours enrouler le câble dans ce sens est une contrainte impossible à suivre. En effet, généralement, un câble enroulé sur un premier touret d'approvisionnement est coupé à une certaine longueur, pour être fourni à un client et être enroulé sur un second touret, son extrémité libre sur le premier touret devenant l'extrémité intérieure de début d'enroulement sur le second touret.

Comme le câble peut donc être enroulé dans l'autre sens, il est en fait nécessaire de considérer la première valeur portée par l'extrémité libre du câble et la valeur de la paire suivante, pour déterminer s'il faut effectuer une addition ou une soustraction afin d'obtenir la longueur désirée et repérer la paire de valeur où la coupe doit être effectuée. Cette opération est source de perte de temps et d'erreurs.

L'invention résout ce problème en proposant un câble de transport électrique ou de données équipé d'un dispositif de marquage de fonction aisée et rapide quel que soit le sens d'enroulement du câble marqué.

Pour ce faire, l'invention propose un câble comportant un dispositif de marquage consistant en des paires de valeurs de longueur identiques adjacentes, les paires étant respectivement espacées d'une unité de longueur et étant constituées de valeurs croissantes, ce dispositif de marquage étant destiné à permettre la coupe d'un tronçon de longueur L de câble enroulé sur un touret, **caractérisé en ce que** ledit dispositif de marquage comporte également deux marques différentes de part et d'autre de chaque paire de valeurs.

Selon un mode de réalisation préféré, lesdites marques sont le signe «-» disposé à gauche de chaque paire et le signe «+» disposé à droite de chaque paire, le câble étant disposé avec la paire de valeurs inférieures à gauche et la paire de valeur supérieures à droite.

Avantageusement, une marque de coupe est disposée entre deux valeurs de chaque dite paire, à égale distance de ces deux valeurs

Selon un mode de réalisation, le câble est associé à un capuchon de longueur définie destiné à recouvrir au moins une de ses extrémités, et, selon l'invention, la distance entre deux valeurs de longueur identiques d'une dite paire est supérieure ou égale au double de ladite longueur du capuchon.

De préférence, la distance entre deux valeurs de longueur identiques d'une dite paire est sensiblement égale au double de ladite longueur du capuchon.

L'invention concerne également un procédé de coupe d'un tronçon de longueur L de tel câble enroulé sur un touret, **caractérisé en ce qu'il** consiste à
- considérer la valeur de ladite paire de son extrémité libre et à ajouter ou soustraire la longueur L à cette première valeur pour obtenir une seconde valeur, selon la marque desdites deux marques différentes disposées de part et d'autre de cette paire de valeurs, opposée à la dite extrémité libre par rapport à ladite paire de premières valeurs,
- se reporter à ladite paire de secondes valeurs sur ledit câble et
- effectuer la coupe au moyen d'un outil de coupe sensiblement à égale distance de deux valeurs de la dite paire de secondes valeurs.

L'invention est décrite ci-après plus en détail à l'aide de figures ne représentant qu'un mode de réalisation préféré de l'invention.
La figure 1 est une vue de face d'un câble conforme à l'invention.
Les figures 2 et 3 sont des vues en perspective d'un touret sur lequel est enroulé un câble conforme à l'invention.

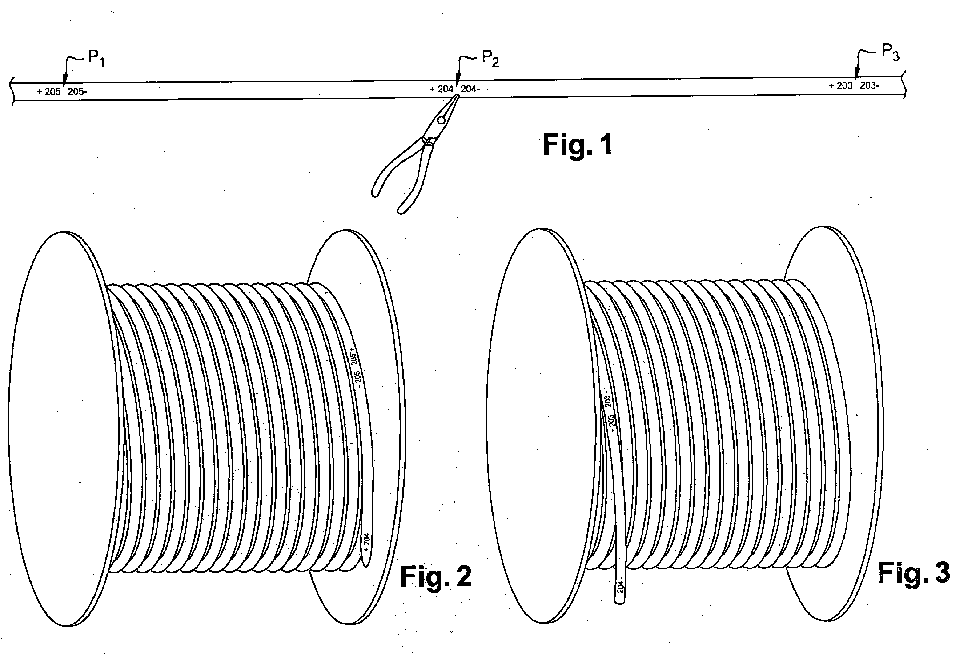

Comme illustré sur la figure 1, conformément à l'invention, le dispositif de marquage d'un câble consiste en des paires P1, P2, P3 de valeurs de longueur identiques adjacentes, les paires étant respectivement espacées d'une unité de longueur et étant constituées de valeurs croissantes, ici par exemple de droite à gauche, et comporte également deux marques différentes de part et d'autre de chaque paire de valeurs.

Ces marques sont le signe «-» disposé à droite de chaque paire P1, P2, P3 et le signe «+» disposé à gauche de chaque paire P1, P2, P3, le câble étant disposé avec la paire de valeurs supérieures à gauche et la pair de valeurs inférieures à droite.

De préférence, ce dispositif de marquage est appliqué à un câble de transport électrique ou de données destiné à être enroulé sur un touret.

La fonction d'un tel dispositif de marquage est illustrée sur les figures 2 et 3.

Le touret représenté sur la figure 2 est équipé d'un tel câble enroulé en partant de son extrémité portant la valeur de longueur supérieure et son extrémité libre porte la valeur inférieure. Grâce au signe «+» adjacent à la valeur de longueur « 204 » de son extrémité libre, un simple coup d'oeil suffit pour savoir qu'il faut se reporter à la paire de valeurs « 204 + L » et couper le câble entre les deux valeurs de cette paire pour obtenir la coupe d'un câble de longueur L.

Selon la figure 3, le touret est équipé d'un tel câble enroulé dans l'autre sens, c'est-à-dire en partant de son extrémité portant la valeur de longueur inférieure et son extrémité libre porte la valeur supérieure. Grâce au signe «-» adjacent à la valeur de longueur « 204 » de son extrémité libre, un simple coup d'oeil suffit pour savoir qu'il faut se reporter à la paire de valeurs « 204 - L » et couper le câble entre les deux valeurs de cette paire pour obtenir la coupe d'un câble de longueur L.

Les signes «-» et «+» sont préférés car de lecture directe. Cependant, d'autres signes peuvent être utilisés par exemple des flèches. Il suffit qu'une procédure précise quant à la mesure soit fournie.

De préférence, la distance entre les deux valeurs de longueur identique d'une même paire est définie en fonction du diamètre du câble de transport électrique ou de données.

En effet, à l'extrémité libre d'un tel câble est mis en place un capuchon de forme cylindrique à fond fermé en général en matière thermo-rétractable. C'est en particulier le cas pour les câbles de transport électrique.

La longueur L de ce capuchon est fonction du diamètre du câble. A titre d'exemples :
- pour un câble de diamètre inférieur à 20 mm, la longueur standard du capuchon est de 5,6 cm,
- pour un câble de diamètre compris entre 20 et 40 mm, la longueur standard du capuchon est de 9,2 cm,
- pour un câble de diamètre entre 40 et 60 mm, la longueur standard du capuchon est de 12 cm,
- pour un câble de diamètre entre 60 et 80 mm, la longueur standard du capuchon est de 13,9 cm,

Pour assurer la fonction du dispositif de marquage selon l'invention, il faut que la distance entre les deux valeurs de longueur d'une même paire soit supérieure ou égale au double de cette longueur L de capuchon. De préférence, cette distance est choisie sensiblement égale au double de cette longueur L de capuchon, la procédure indiquant que la coupe doit être effectuée sensiblement à égale distance de ces deux valeurs. Eventuellement une marque de coupe peut être prévue entre ces deux valeurs, à égale distance de ces deux valeurs.

De cette façon, il est assuré que la pose du capuchon ne viendra pas dissimuler ni la valeur de longueur de l'extrémité libre du câble enroulé sur le touret d'approvisionnement, ni la valeur de l'extrémité du tronçon de câble coupé qui en général est enroulé sur un second touret.

## Revendications

1. Câble comportant un dispositif de marquage consistant en des paires (P1, P2, P3) de valeurs de longueur identiques adjacentes, les paires étant respectivement espacées d'une unité de longueur et étant constituées de valeurs croissantes, ce dispositif de marquage étant destiné à permettre la coupe d'un tronçon de longueur L de câble enroulé sur un touret, **caractérisé en ce que** ledit dispositif de marquage comporte également deux marques différentes de part et d'autre de chaque paire de valeurs.

2. Câble selon la revendication 1, **caractérisé en ce que** lesdites marques sont le signe «-» disposé à droite de chaque paire et le signe «+» disposé à gauche de chaque paire, le câble étant disposé avec la paire de valeurs supérieures à gauche et la paire de valeurs inférieures à droite.

3. Câble selon la revendication 1 ou 2, **caractérisé en ce qu'**une marque de coupe est disposée entre deux valeurs de chaque dite paire, à égale distance de ces deux valeurs.

4. Câble de transport électrique ou de données associé à un capuchon de longueur définie destiné à recouvrir au moins une de ses extrémités et selon l'une des revendications précédentes, **caractérisé en ce que** la distance entre deux valeurs de longueur identiques d'une dite paire est supérieure ou égale au double de ladite longueur du capuchon.

5. Câble selon la revendication précédente, **caractérisé en ce que** la distance entre deux valeurs de longueur identiques d'une dite paire est sensiblement égale au double de ladite longueur du capuchon.

6. Procédé de coupe d'un tronçon de longueur L de câble enroulé sur un touret et selon l'une des revendications précédentes, **caractérisé en ce qu'il** consiste à
- considérer la valeur de ladite paire de son extrémité libre et à ajouter ou soustraire la longueur L à cette première valeur pour obtenir une seconde valeur, selon la marque desdites deux marques différentes disposées de part et d'autre de cette paire de valeurs, opposée à la dite extrémité libre par rapport à ladite paire de premières valeurs,
- se reporter à ladite paire de secondes valeurs sur ledit câble et
- effectuer la coupe au moyen d'un outil de coupe sensiblement à égale distance de deux valeurs de la dite paire de secondes valeurs.

## Patentansprüche

1. Kabel, das eine Markierungsvorrichtung aufweist, die aus Paaren (P1, P2, P3) benachbarter identischer Längenwerte besteht, wobei die Paare jeweils in einer Längeneinheit beabstandet sind und aus zunehmenden Werten bestehen, wobei diese Markierungsvorrichtung dazu bestimmt ist, das Abtrennen eines auf einer Trommel aufgerollten Kabelabschnitts der Länge L zu erlauben, **dadurch gekennzeichnet, dass** die Markierungsvorrichtung ebenfalls zwei unterschiedliche Markierungen auf der einen und der anderen Seite jedes Wertepaars aufweist.

2. Kabel nach Anspruch 1, **dadurch gekennzeichnet, dass** die Markierungen das Zeichen "-", das rechts von jedem Paar angeordnet ist, und das Zeichen "+", das links von jedem Paar angeordnet ist, sind, wobei das Kabel mit dem höheren Wertepaar links und mit dem niedrigeren Wertepaar rechts angeordnet ist.

3. Kabel nach Anspruch 1 oder 2, **dadurch gekennzeichnet, dass** eine Schnittmarkierung zwischen zwei Werten jedes Paars in gleichem Abstand von diesen zwei Werten angeordnet ist.

4. Strom- oder Datentransportkabel, das einer Kappe festgelegter Länge zugeordnet ist, die zum Abdecken mindestens eines seiner Enden bestimmt ist und nach einem der vorangehenden Ansprüche, **dadurch gekennzeichnet, dass** der Abstand zwischen zwei identischen Längenwerten eines Paars größer oder gleich dem Doppelten der Länge der Kappe ist.

5. Kabel nach vorangehendem Anspruch, **dadurch gekennzeichnet, dass** der Abstand zwischen zwei identischen Längenwerten eines Paars etwa gleich dem Doppelten der Länge der Kappe ist.

6. Schneidverfahren eines auf einer Trommel aufgerollten Kabelabschnitts der Länge L und nach einem der vorangehenden Ansprüche, **dadurch gekennzeichnet, dass** es darin besteht:
- Ermitteln, gemäß der Markierung der zwei unterschiedlichen Markierungen, die auf der einen und der anderen Seite dieses Wertepaars angeordnet sind, die dem freien Ende im Verhältnis zum ersten Wertpaar gegenübersteht, des Werts des Paars an seinem freien Ende und Hinzufügen oder Abziehen der Länge L von diesem ersten Wert, um einen zweiten Wert zu erhalten,
- Bezug nehmen auf das zweite Wertepaar auf dem Kabel, und
- Durchführen des Schnitts mit Hilfe eines Schneidwerkzeugs etwa in gleichem Abstand von zwei Werten des zweiten Wertepaars.

## Claims

1. A cable including a marking device consisting of pairs (P1, P2, P3) of adjacent identical length values, the pairs respectively being spaced apart by a unit of length and being made up of increasing values, this marking device being designed to allow the cutting of a segment with length L of cable wound around a cable drum, **characterized in that** said marking device also includes two different marks on either side of each pair of values.

2. The cable according to claim 1, **characterized in that** said marks are the "-" sign positioned to the right of each pair and the "+" sign positioned to the left of each pair, the cable being positioned with the pair of higher values to the left and the pair of lower values to the right.

3. The cable according to claim 1 or 2, **characterized in that** a cutting mark is positioned between the two values of each said pair, at an equal distance from those values.

4. An electric or data cable associated with a cap with a defined length designed to cover at least one of its ends and according to one of the preceding claims, **characterized in that** the distance between two identical length values of one said pair is greater than or equal to twice said length of the cap.

5. The cable according to the preceding claim, **characterized in that** the distance between two identical length values of one said pair is substantially equal to twice said length of the cap.

6. A method for cutting a segment with length L of cable wound on a cable drum and according to one of the preceding claims, **characterized in that** it consists of:
- considering the value of said pair from its free end and adding or subtracting the length L with respect to the first value to obtain a second value, according to the mark of said two different marks positioned on either side of that pair of values, opposite said free end relative to said pair of first values,
- referring to said pair of second values on said cable, and
- performing cutting using a cutting tool substantially at equal distances from the two values of said pair of second values.
